# EUROPEAN PATENT APPLICATION

(11) **EP 3 078 823 A1**
(43) Date of publication of application: **12.10.2016**
(21) Application number: 15162678.5
(22) Date of filing: 07.04.2015
(51) Int. Cl.: F01N 3/20, C01B 3/00

(54) **SYSTEM FOR USE ON-BOARD A VEHICLE, FOR PERFORMING A CHEMICAL REACTION USING A CATALYST**

(71) Applicant: Inergy Automotive Systems Research (Société Anonyme), 1120 Bruxelles (BE)
(72) Inventor: Monge-Bonini, Beatriz, 1040 Bruxelles (BE); Van Schaftingen, Jules-Joseph, 1300 Wavre (BE); de Man, Pierre, 1090 Bruxelles (BE); Dougnier, François, 3190 Boortmeerbeek (BE)
(74) Representative: Remy, Vincent Noel Paul

(57) **Abstract**

A system for use on-board a vehicle, for performing a chemical reaction using a catalyst, the system comprising:
a tank (10) adapted for storing a fluid;
a retaining unit (20) retaining a catalyst for performing the chemical reaction, the retaining unit having an inlet section (21) and an outlet section (22);
a receiving part (30) configured for removably receiving the retaining unit (20); the receiving part (30) being provided with a first coupling section (31) and a second coupling section (32) which are removably couplable to the inlet section (21) and the outlet section (22) of the retaining unit (20) in a sealing manner, respectively.

## Description

### Field of Invention

The invention relates to a system for use on-board a vehicle, for performing a chemical reaction using a catalyst, and in particular for decomposing a solution using a catalyst, and to various components for use in such a system.

### Background

There exist prior art systems for supplying ammonia to an exhaust line of a vehicle in order to reduce the NOx emissions. A SCR (Selective Catalytic Reduction) process is used for converting nitrogen oxides of an exhaust gas coming from a vehicle engine into diatomic nitrogen and water. The SCR process enables the reduction of nitrogen oxides by injection of a reducing agent, generally ammonia, into the exhaust line. This ammonia may be obtained by using different techniques.

One known technique is based on the use of an ammonia precursor, for example an aqueous urea solution. Generally, such urea solution is stored in a tank mounted on the vehicle. A catalyst is used to generate ammonia from an ammonia precursor solution. Such systems are disclosed in patent applications EP 13182919.4, EP 12199278.8, EP 12199278.8 and EP 13182919.4 in the name of the Applicant, which are included herein by reference.

### Summary

The object of embodiments of the invention is to provide a system for use on-board a vehicle, for performing a chemical reaction using a catalyst, and in particular for decomposing a solution using a catalyst, said system allowing for replacing a catalyst in a simple and clean manner. Specific embodiments of the invention have as an object to be suitable for use with catalysts operating for the conversion of fluids, such as an ammonia precursor solution, that can be pumped in accessible locations around the vehicle, e.g. fluids that can be converted at relatively low temperatures (<200°C).

According to a first aspect of the invention there is provided a system for use on-board a vehicle, for performing a chemical reaction using a catalyst, and in particular for decomposing a solution using a catalyst. The system comprises a tank adapted for storing a fluid, typically a liquid; a retaining unit retaining a catalyst for performing the chemical reaction, and a receiving part configured for removably receiving said retaining unit. The retaining unit has an inlet section and an outlet section. The receiving part is provided with a first coupling section and a second coupling section which are removably couplable to the inlet section and the outlet section of the retaining unit in a sealing manner, respectively, and the inlet coupling section is connected to the interior of the tank for receiving the fluid from the tank for use in the chemical reaction.

By providing a retaining unit in the form of a separate structure retaining the catalyst and by providing a suitable receiving part, the catalyst can be replaced by simply inserting, e.g. sliding, the retaining unit into the adapted receiving part, where in operation, with the retaining unit in place, a chemical reaction takes place. The fluid can flow from the tank to the inlet coupling section, through the inlet section into the retaining unit, and, after the chemical reaction has taken place, from there through the outlet section and the outlet coupling section to another location where the reaction product, e.g. a decomposed solution, is required.

A typical application of embodiments of the invention is for the conversion of ammonia precursor into ammonia using enzymes as a catalyst. The generated ammonia is used for Selective Catalytic Reduction (SCR) of the exhaust gases (NOx reduction), as fuel for fuel cells, or for other applications on-board of the vehicle.

In a typical embodiment, the fluid is a liquid. In a preferred embodiment the liquid is an ammonia precursor solution, typically AdBlue®, and the catalyst is adapted for decomposing the ammonia precursor solution to generate ammonia. It is noted that the ammonia precursor solution may be prepared, at least partly, within the retaining unit by dissolving ammonia precursor in solid form in the retaining unit; and/or, at least partly before arriving at the retaining unit, e.g. in a separate dissolving compartment in the tank. In exemplary embodiments it may be advantageous to dissolve ammonia precursor in solid form in the ammonia precursor liquid gradually, as the reaction proceeds. Such a gradual dissolving may be advantageous for the life time of the catalyst since an ammonia precursor solution having a high concentration of ammonia precursor may be unfavourable for the catalyst. In an embodiment with a dissolving compartment in the retaining unit, the liquid that is transferred from the tank to the retaining unit may be water or a liquid with a low ammonia precursor concentration, the ammonia precursor in solid form may be transferred (optionally together with the liquid) to the retaining unit or may be stored in the retaining unit, and the ammonia precursor in solid form may be dissolved in the liquid in the retaining unit.

In an alternative embodiment, the compound is a hydrogen precursor, such as ammonia or polysaccharide. Good results are known for the enzymatic conversion of a polysaccharide such as sucrose into hydrogen, for instance with enzymes such as invertase, glucose dehydrogenase (GDH), hydrogenase, and glucose isomerase (GI). This may be highly useful to provide hydrogen for use in fuel cells.

In a preferred embodiment the catalyst is a biological catalyst. The biological catalyst is preferably a catalyst composition in a solid form, e.g. enzymes in solid form. Preferably the enzymes are immobilized on a carrier. Enzymes may be immobilized on a variety of carriers including synthetic polymers, biopolymers, hydrogels and inorganic supports. Examples of biopolymers are for instance gelatin, polysaccharides such as cellulose, starch, agarose, chitosan and alginates. Examples of inorganic supports are alumina, silica, zeolites and mesoporous silica. One suitable method is the immobilization by silica granulation. This may result in gradual removal of the enzyme from the carrier. Alternatively, immobilization is achieved by means of entrapment in sol-gel matrices, such as silica sol-gels prepared by hydrolytic polymerisation of tetraethoxysilane and other silanes. Modified sol-gels are also known as xerogels, ambigels and aerogels. The sol-gels may be designed to exhibit large surface areas and pore volumes, with hollow spherical morphology, as well as hydrophilic surfaces. The capsules and/or other solid forms are preferably provided with a diameter in the range of 10 microns to 10 cm, preferably 1 mm to 1 cm. The capsule may be based on microencapsulation, comprising a plurality of beads with enzyme immobilized on carrier in a matrix. The matrix may be herein optimized to be slowly dissolvable, in dependence of the pH of the reaction medium, so as to obtain modified-release capsules. In a preferred embodiment, use is made of a capsule that does not - or at least not substantially - disintegrate. The carrier is preferably a porous body, and the enzyme is suitably located at a surface inside said porous body.

In an exemplary embodiment, the catalyst is an urease enzyme. This catalyst is suitable for the conversion of an ammonia precursor such as urea. Suitably, the urease enzyme is immobilized on a biopolymer carrier. The use of such a carrier results in improved stability. One example of a suitable solid carrier is for instance a synthetic polymer such as polystyrene, EVOH, nylon-6 and the like. Other examples of carriers are carbohydrates, such as chitosan, dextran and agarose; porous nanoparticles, for instance of silica; gelatine; and alginates. The use of chitosan is deemed highly suitable, since it tends to increase optimum pH of the urease to a higher pH, resulting in optimum activity in the ammonia precursor composition e.g. solution.

In an exemplary embodiment the catalyst is provided in solid form. The solid form may be a powder or a powder compressed into one or more pellets, granules or beads. Alternatively, the catalyst may be provided in the form of capsules, pills or cartridges.

In other exemplary embodiments the catalyst may be provided in liquid form. In a particular embodiment, the catalyst may be provided as a liquid composition inside a solid jacket such as a cartridge, a capsule, etc.

In an exemplary embodiment the catalyst (solid or liquid) may be encapsulated. In a first exemplary embodiment, the catalyst may be provided with a coating to maintain integrity and to avoid contamination of the catalyst and/or of its composition. In another exemplary embodiment the catalyst may be provided with a hydrogel encapsulating the catalyst.

In an exemplary embodiment, use is made of a solid substrate onto which the catalyst is immobilized. Examples of suitable solid substrates are: synthetic polymers, such as polystyrene, EVOH, nylon-6 and the like; carbohydrates, such as chitosan, dextran and agarose; porous nanoparticles, for instance of silica.

In an exemplary embodiment the receiving part is integrated in a wall of the tank, e.g. in a top wall, a side wall or a bottom wall of the tank. In another exemplary the tank is provided with a filler pipe, and the receiving part is integrated in the filler pipe. In yet another exemplary embodiment the receiving part is located at a distance of the tank. The location is preferably chosen such that the receiving part is easily accessible on the vehicle.

In a preferred embodiment the receiving part comprises heating means, said heating means being configured for heating the fluid in the retaining unit, when said retaining unit is arranged in said receiving part. The heating means will allow providing a suitable temperature in the retaining unit for promoting the chemical reaction in the presence of the catalyst. More particularly, the catalyst may be thermally activated by the heating means.

In a preferred embodiment the retaining unit is provided with a recess for receiving the heating means. In that way the heat can be provided from a space within the retaining unit in a convenient manner. Moreover, the heating means may be embodied as a guiding means for positioning the retaining unit in a correct position within the receiving part. More preferably the recess is located substantially centrally in the retaining unit.

In an exemplary embodiment the receiving part has the shape of a cup with a bottom wall and a circumferential side wall. The heating means are preferably arranged on the bottom wall at a distance of the circumferential side wall. In addition the receiving part may be provided with thermal conditioning means, e.g. Peltier elements, for heating and/or cooling the retaining unit. The thermal conditioning means may be arranged in or against an inner wall of the receiving part. It is noted that the receiving part may be provided with heating means and/or with thermal conditioning means.

In an exemplary embodiment the tank comprises a buffer reservoir and the outlet coupling section is connected to the buffer reservoir. The reaction product leaving the retaining unit may be temporarily stored in the buffer reservoir before it is transported to a location in the vehicle where the reaction product is needed.

In an exemplary embodiment the system further comprises a cover for closing off the receiving part with retaining unit, such that said receiving part and said cover form a closed housing around the retaining unit, except for the inlet and outlet coupling sections. By adding a cover external contamination can be avoided, the system is further protected, and spillage of ammonia precursor or effluents in the event of leakage of the retaining unit can be avoided.

In an exemplary embodiment the inlet and outlet coupling section are formed as pipe sections extending outwardly from a bottom wall of the receiving part, and the inlet and outlet section of the retaining unit are formed as tube sections shaped to extend over or in the pipe sections. In a preferred embodiment the retaining unit has a housing with a coupling wall, and the tube sections extend from said coupling wall inwardly in said retaining unit. Further, the pipe sections and/or the tube sections may be provided with a seal. Such an embodiment will allow for a simple coupling between the retaining unit and the receiving part.

In an exemplary embodiment the inlet section and/or the outlet section comprises a valve; and/or the inlet coupling section and/or the outlet coupling section comprise a valve. By providing a valve in the inlet and outlet section it can be avoided that fluid escapes during removal of the retaining unit from the receiving part. By providing a valve in the inlet and/or outlet coupling section the flow to/from the retaining unit can be regulated.

In an exemplary embodiment the system further comprises a pump, said pump being connected to pump fluid in the tank, via the inlet coupling section, to the retaining unit, and from the retaining unit through the outlet coupling section.

According to another aspect there is provided an SCR system for a vehicle comprising a system according to any one of the embodiments disclosed above.

According to another aspect there is provided a fuel cell system comprising a system according to any one of the embodiments disclosed above.

According to yet another aspect there is provided a receiving part configured for removably receiving a retaining unit. The receiving part is provided with a first coupling section and a second coupling section which are removably couplable to an inlet section and an outlet section of a retaining unit in a sealing manner, respectively, said inlet coupling section being intended for connection to an interior of a tank. The receiving part may have any one or more of the features that have been disclosed above in connection with the system.

According to a particular embodiment, the receiving part comprises heating means, said heating means being configured for heating the fluid in the retaining unit, when said retaining unit is arranged in said receiving part.

According to a particular embodiment, the receiving part has substantially the shape of a cup with a bottom and circumferential side wall, and wherein the heater extends upwardly from the bottom at a distance from the circumferential side wall.

According to a particular embodiment, the receiving part is provided with thermal conditioning means for heating and/or cooling the retaining unit.

According to a particular embodiment, the thermal conditioning means are arranged at least in or against the circumferential side wall.

According to a particular embodiment, the receiving part further comprises a cover for closing off the receiving part with retaining unit, such that said receiving part and said cover form a closed housing around said retaining unit, except for the inlet and outlet coupling sections.

According to a particular embodiment, the inlet and outlet coupling section are formed as pipe sections extending outwardly from a bottom wall of the receiving part.

According to another aspect there is provided a tank comprising a receiving part of any one of the above disclosed embodiments, said receiving part being integrated in a wall of the tank.

According to another aspect there is provided a filler pipe comprising a receiving part of any one of the above disclosed embodiments, wherein the receiving part is integrated in the filler pipe. Finally, according to yet another aspect of the invention there is provided a retaining unit, said retaining unit being configured for retaining a catalyst for use in a chemical reaction, said retaining unit having an inlet section and an outlet section; said retaining part being configured for being placed in a receiving part with a first coupling section and a second coupling section, such that the inlet section and the outlet section of the retaining unit are removably coupled in a sealing manner to the inlet section and the outlet section. The catalyst is preferably a biological catalyst. Preferably, the retaining unit is provided with a recess for receiving heating means arranged in the receiving part, when said retaining unit is placed in the receiving part. Preferably, the retaining unit has a housing with a coupling wall, and wherein the inlet and outlet section extend from said coupling wall inwardly in said retaining unit. Preferably, the inlet and outlet section are each provided with a seal.

In an exemplary embodiment there may be provided transfer means for transferring a fluid from the tank to the inlet coupling section. The transfer means may be e.g. a pump, a valve, a combination of both, gravity, gravity in combination with a valve, or a valve in combination with whatever system known by the person skilled in the art to transfer the fluid.

Further, it is noted that embodiments of the invention may also be used in an ammonia precursor booster system comprising a storage compartment for storing ammonia precursor granules, and a dissolving compartment for storing an ammonia precursor solution, and for dissolving ammonia precursor granules in the ammonia precursor solution. An example of such a booster system is disclosed in European patent application EP 14177713.6 in the name of the Applicant, which is included herein by reference. The dissolving compartment may be included in the tank of embodiments of the present invention. Alternatively, the dissolving compartment may be included in the retaining unit of embodiments of the present invention. According to yet another exemplary embodiment there may be a first dissolving compartment outside of the retaining unit and a second dissolving compartment in the retaining unit. If the dissolving compartment has a heater, this heater may also function as the heater for the retaining unit of the present invention. The heater may be configured to heat the dissolving compartment at a first temperature and to heat a catalyst compartment of the retaining structure at a second temperature. In an embodiment with dissolving compartment in the retaining unit, the fluid that is transferred from the tank to the retaining unit may comprise granules. Alternatively, liquid and granules could be transferred separately to the retaining unit and/or the retaining unit could be provided with a storage compartment for the granules.

According to a further aspect, the invention relates to the use of a system according to any one of the embodiments above in a vehicle.

### Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:
Figure 1 is a diagram illustrating an exemplary embodiment of a system of the invention in which the retaining unit is integrated in the top wall of the tank;
Figures 2 and 3 illustrate an exemplary embodiment of a retaining unit and receiving part in a removed and inserted position of the retaining unit, respectively;
Figure 4A, 4B and 4C are diagrams illustrating exemplary embodiments of a system of the invention with the retaining unit integrated in an upper side wall of the tank, in a lower side wall of the tank, and in a bottom wall of the tank, respectively;
Figure 5 is a diagram illustrating an exemplary embodiment of a system of the invention in which the retaining unit is provided at a distance of the tank;
Figure 5A is a section through A-A of figure 5;
Figure 6 is a diagram illustrating an exemplary embodiment of a system of the invention in which the retaining unit is integrated in a filler pipe of the tank;
Figure 6A is a section through A-A of figure 6;
Figure 6B illustrates a variant of the embodiment of figure 6A;
Figure 7 is a diagram illustrating an exemplary embodiment of a system of the invention in which multiple retaining modules are provided;
Figures 8A, 8B, and 8C illustrate exemplary embodiments of a retaining unit;
Figures 9-11 illustrate another exemplary embodiment of a retaining unit of the invention; and
Figures 12-14 are schematic drawings illustrating three further embodiments of a system of the invention in which a solid ammonia precursor is used.

### Description of embodiments

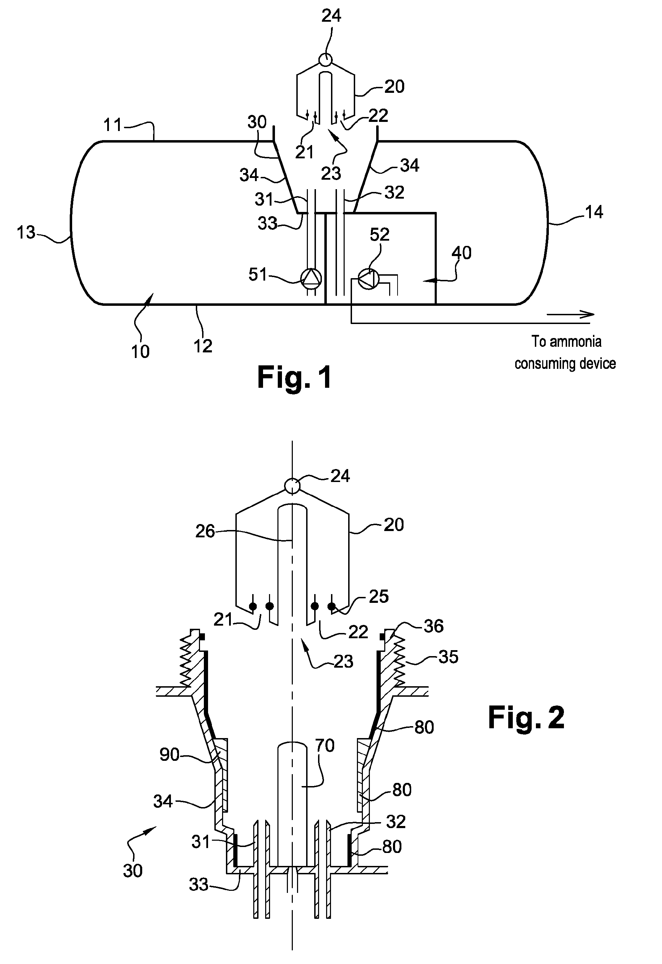

Figure 1 illustrates a first embodiment of an ammonia generating system. The ammonia generating system comprises a tank 10, a retaining unit 20, and a receiving part 30 for receiving the retaining unit 20. The tank 10 is adapted for storing an ammonia precursor solution, such as a urea solution. In embodiments of the invention the tank 10 may be filled with the commercially available liquid ammonia precursor, known as AdBlue^{®} and matching the ISO 22241 standard specifications. Such a fluid contains 32.5 ± 0.7 weight % urea.

The retaining unit 20 retains a biological catalyst, e.g. an enzyme, for decomposing ammonia precursor solution to generate an ammonia solution. The retaining unit 20 has an inlet section 21 and an outlet section 22. The receiving part 30 is configured for removably receiving the retaining unit 20. The receiving part 30 is provided with a first coupling section 31 and with a second coupling section 32 which are removably couplable to inlet section 21 and outlet section 22 of the retaining unit 20 in a sealing manner, respectively. The inlet coupling section 31 is connected to the interior of the tank 10 such that ammonia precursor solution can be fed from the tank 10 to the retaining unit 20.

In the first embodiment the receiving part 30 is integrated in a top wall 11 of the tank 10. The receiving part 30 has a bottom wall 33 and a circumferential wall 34. The circumferential wall has a first end connected to the bottom wall 33 and a second end connected to the top wall 11 of the tank 10. The inlet and outlet coupling section 31, 32 are formed as pipe sections extending outwardly from the bottom wall 33 of the receiving part 30. The inlet and outlet sections 21, 22 of the retaining unit 20 are formed as tube sections shaped to extend over or in the pipe sections 31, 32. The retaining unit 20 has a housing with a coupling wall 23, and the tube sections 21, 22 extend from said coupling wall 23 inwardly in said retaining unit 20. The retaining unit 20 may be provided with a holding part 24 configured for easily inserting or removing the retaining unit 20 into the receiving part 30.

The tank comprises a buffer reservoir 40 and the outlet coupling section is connected to the interior of the buffer reservoir 40 such that ammonia solution can be fed from the retaining unit 20 to the buffer reservoir 40.

Tank 10 stores an ammonia precursor, for instance AdBlue®/DEF which are urea aqueous solutions. Catalyst retaining unit 20 stores a catalyst, typically a biological catalyst, and for instance an enzyme such as urease. The receiving part 30 with the inserted retaining unit 20 constitutes a decomposition area where the conversion of the ammonia precursor into ammonia takes place. There may be provided heating means and/or thermal conditioning means (not shown) for promoting this conversion. A cover (not shown) may be closing the decomposition area prior to operation.

A fluid transfer device 51 allows the transfer of ammonia precursor solution to the decomposition area in the retaining unit 20. The generated effluents containing the ammonia are collected in buffer reservoir 40, from which they are sent to an ammonia consuming device (not shown) optionally using a fluid transfer device 52. A fluid transfer device can be for example a pump, a valve, a combination of both, gravity, gravity in combination with a valve or a valve in combination with whatever system known in the state of the art to transfer liquid. It is noted that fluid transfer device 52 is optional: if fluid transfer device 51 is a pump, it can pressurize both the retaining unit 20 and the buffer reservoir 40 so that the effluents can be sent directly to the ammonia consuming device.

The access port for the replacement of retaining unit 20 is located in this embodiment at the upper wall 11 of the tank 10. Such a layout is convenient when the upper wall 11 is accessible, for instance when the tank is located in the trunk of the vehicle, or under the vehicle chassis at the level of an access door.

In the event that the reactants and/or effluents present some handling risks or nuisances (toxicity, odour, etc), the retaining unit 20 may be purged. For instance if the effluents are to be eliminated from the retaining unit 20, fluid transfer device 51 can be activated to pump reactants inside the retaining unit 20 while the heater means (not shown) are not activated (resulting in no or only a limited conversion into effluents), prior to the exchange of the catalyst.

An example of a urea decomposition system is disclosed in patent applications EP 13182919.4 and EP 12199278.8 in the name of the Applicant, the contents of which are included herein by reference. In those applications the Applicant has proposed two new methods for generating ammonia on board a vehicle (passenger car, truck, etc.) based on a biological catalysis. Biological catalysis comprises all forms of catalysis in which the activating species (i.e. biological catalysts) is a biological entity or a combination of such. Included among these are enzymes, subcellular organelles, whole cells and multicellular organisms. More precisely, according to a first method, a protein component is used to catalyse the hydrolysis (i.e. decomposition) of an ammonia precursor solution (for example, urea) into a mixture comprising at least ammonia, carbon dioxide and water. Such first method is described in more detail in patent application EP 13182919.4. According to a second method proposed by the Applicant, a protein component is used to catalyse the hydrolysis (i.e. decomposition) of an ammonia precursor solution (for example, urea) into ammonia gas. For example, the generated ammonia gas can be directed (i.e. transmitted) to a solid absorbing matrix where it is stored thereon by sorption. Such second method is described in more detail in patent application EP 12199278.8.

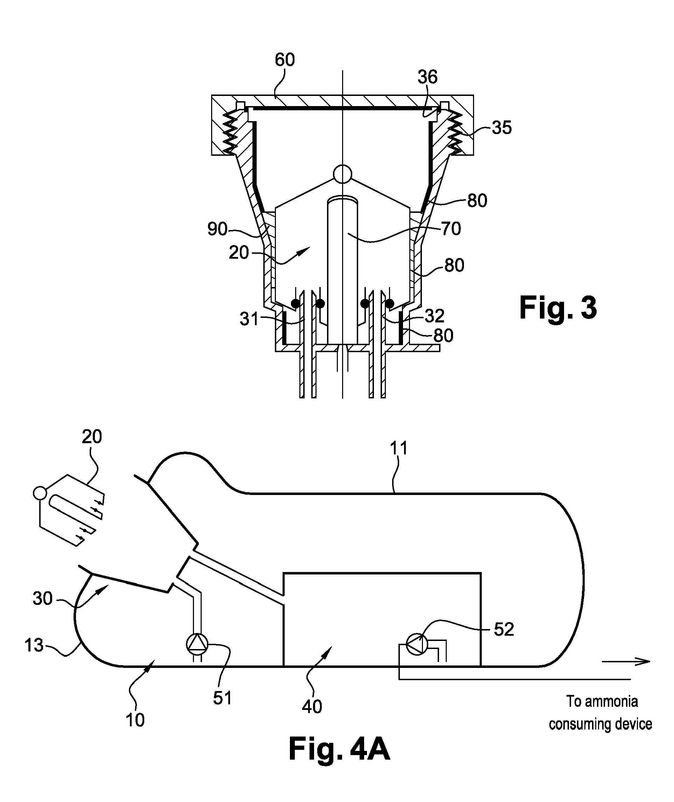

Figures 2 and 3 illustrate in detail an exemplary embodiment of a receiving part 30 with a retaining unit 20 in a removed position and with an inserted retaining unit 20 in an operating position, respectively. The receiving part 30 comprises a heater 70. The heater 70 is configured for heating ammonia precursor solution in the retaining unit 20, when the retaining unit 20 is arranged in the receiving part 30 (figure 3). In the illustrated embodiment the retaining unit 20 is provided with a recess 26 for receiving the heater 70. The recess 26 is arranged substantially centrally in said retaining unit 20, such that the heater 70 can heat the entire retaining unit 20 from within the centre. In such an embodiment the heater 70 may also function as a guiding structure ensuring a correct positioning of the retaining unit 20 when it is inserted in the receiving part 30. Further the receiving part 30 may be provided with thermal conditioning means 80 for heating and/or cooling the retaining unit 20. The thermal conditioning means 80 are arranged advantageously against an inner circumferential wall 34 of the receiving part 30.

The heater 70 heats up the decomposition area at the appropriate temperature for the reaction, i.e. for the decomposing of the ammonia precursor into ammonia. In the event that the biological catalyst is urease, a suitable temperature would be from around 40 to 60°C. The heater 70 can be of any type as known in the state of the art. Typically a resistive heater is well suited. However, it is also possible to provide, as a heater, a conduit through which the cooling liquid of the engine is circulated. The thermal conditioning elements 80 may contribute to the heating during the decomposition of the ammonia precursor solution, e.g. a urea solution. The thermal conditioning elements 80 may also condition the catalysts, typically enzymes, e.g. by cooling the catalyst around 4°C. In that way longer conservation times can be reached, and the decomposition reaction may be interrupted or slowed down while the vehicle is stopped. These conditioning elements 80 can be e.g. Peltier effect devices, isolating elements, phase change materials, or combinations of thereof.

The receiving part 30 has a bottom wall 33 which is provided with two pipe sections 31, 32, also called nipples, which are penetrating inside the retaining unit 20 when the retaining unit 20 is put into place, e.g. by sliding. These nipples 31, 32 may be equipped with valves (not shown) preventing fluid to escape when the retaining unit 20 is removed from the receiving part 30. There may be provided guiding elements, such as ribs 90 to allow convenient insertion of the retaining unit 20. The retaining unit 20 is equipped with inlet and outlet sections 21, 22 in the form of access ports fitted with seals 25 to ensure tightness with the nipples 31, 32. The access ports 21, 22 may be equipped with valves (not shown) preventing fluid to escape when the retaining unit 20 is removed from the receiving part 30 to avoid nuisances or risks associated with the spillage of fluids.

The system further comprises a cover 60 for closing off an open end of receiving part 30 with the retaining unit 20 in the operation position, see figure 3. In that manner the receiving part 30 and the cover 60 form a closed housing around retaining unit 20 except for the inlet and outlet coupling sections 31, 32. The receiving part 30 is equipped with threads 35 so as to allow fixation of the cover 60 which is provided with complementary threads. Preferably there is provided a seal 36 between the cover 60 and the open top end of the receiving part 30. A holding ring 24 allows easy handling and insertion in the receiving part 30.

The cover 60 may be equipped with a release mechanism (not drawn), for instance configured to force a purge of the retaining unit 20, before the removal of the cover 60 and of the retaining unit 20.

In another exemplary embodiment (not drawn), the retaining unit 20 is attached to the cover 60, so that when the cover 60 is removed, the retaining unit 20 is removed as well. In a further developed embodiment the coupling between the cover 60 and the retaining unit 20 is designed so as to allow the cover 60 to rotate along the threads 35 while the retaining unit 20 slides along the heater 70, the nipples 31, 32 and the guiding elements 90. Additionally, a poka-yoke system (not drawn) may ensure that the cover 60 cannot be put back in place without the presence of the retaining unit 20.

Figure 4A illustrates another exemplary embodiment of an ammonia generating system comprising a tank 10, a retaining unit 20, and a receiving part 30 for receiving the retaining unit 20. In this embodiment the receiving part 30 is integrated in a side wall 13 of the tank 10. The other features of the system may be similar to those of the embodiments of figures 1-3, and are therefore not further discussed.

In this embodiment, the access port for the replacement of the retaining unit 20 is located on a side surface 13 of the tank instead of being at the top 11. This is convenient when a side surface of the tank is easily accessible, for instance under the chassis or through the trunk.

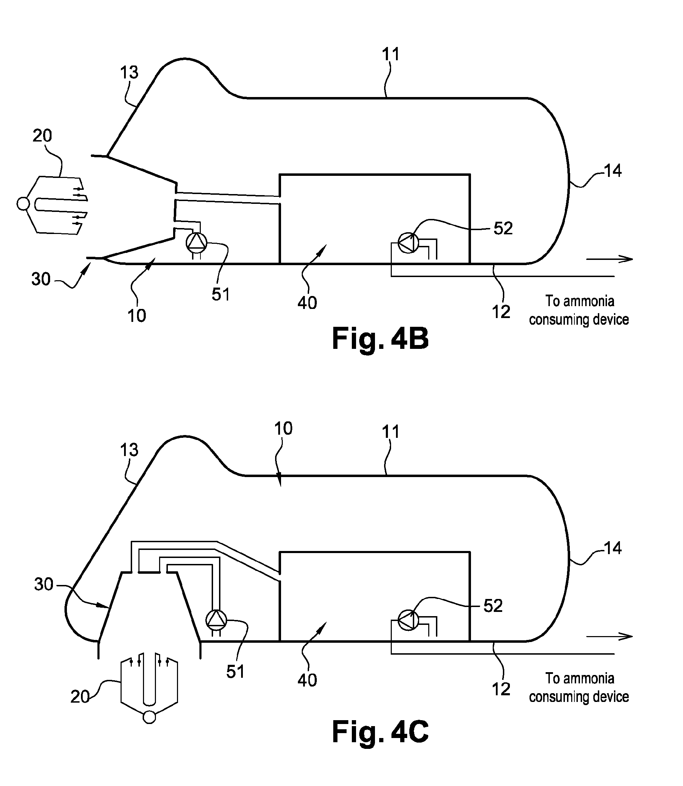

Figures 4B and 4C illustrates two further exemplary embodiments where the receiving part 30 is integrated in a side wall 13 of the tank 10, and in a bottom wall 12 of the tank 10, respectively. In those embodiments the inlet and outlet sections 21, 22 of the retaining unit 20 are located at an upper part of the retaining unit 20 when the retaining unit 20 is removed from the receiving part 30. This has the advantage that, if liquid is present in the retaining unit, this liquid will not be spilled. Such a location of the receiving part 30 in a lower part of the tank 10 will be advantageous when the tank 10 is accessible from underneath the vehicle. Indeed, during maintenance of the vehicle, a technician can then easily remove the retaining unit 20 from underneath the vehicle.

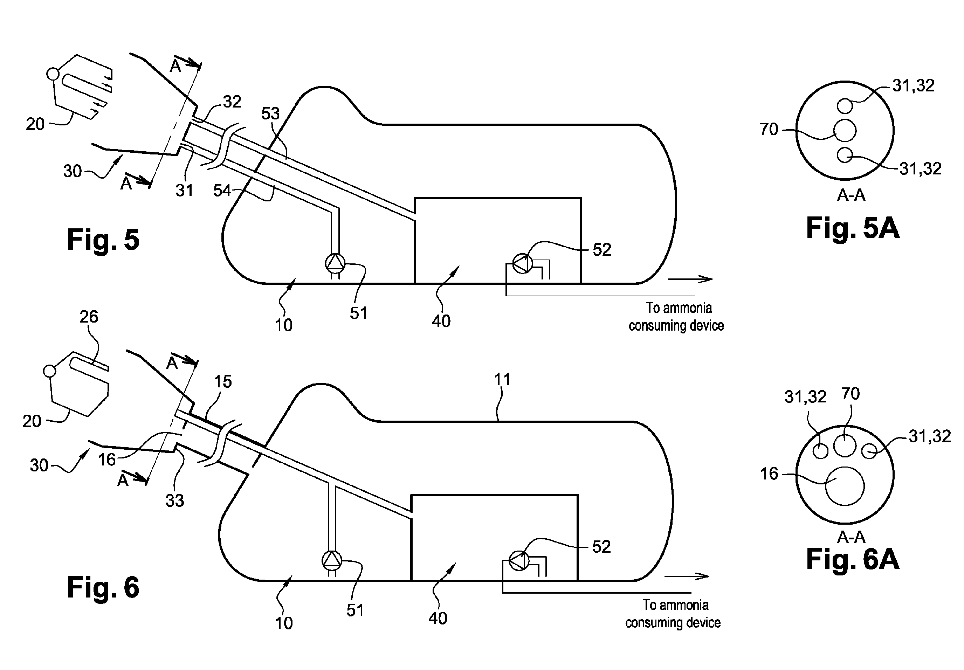

Figure 5 illustrates another exemplary embodiment of an ammonia generating system comprising a tank 10, a retaining unit 20, and a receiving part 30 for receiving the retaining unit 20. In this embodiment the receiving part 30 is separate component located at a distance of the tank 10. The receiving part 30 has coupling sections 31, 32 which are connected by hydraulic lines 53, 54 from and to the tank 10. The receiving part 30 can basically be located anywhere in the vehicle so as to allow convenient access for the retaining unit 20 replacement. The receiving part 30 may also be integrated into other components present in the vehicle (not shown).

The other features of the system may be similar to those of the embodiments of figures 1-3, and are therefore not further discussed. Figure 5A shows a section A-A of the receiving part 30, assuming that there is provided a heater 70 and nipples 31, 32 as in figure 3. The section of figure 5A shows the respective positions of the heater 70 and the nipples 31, 32.

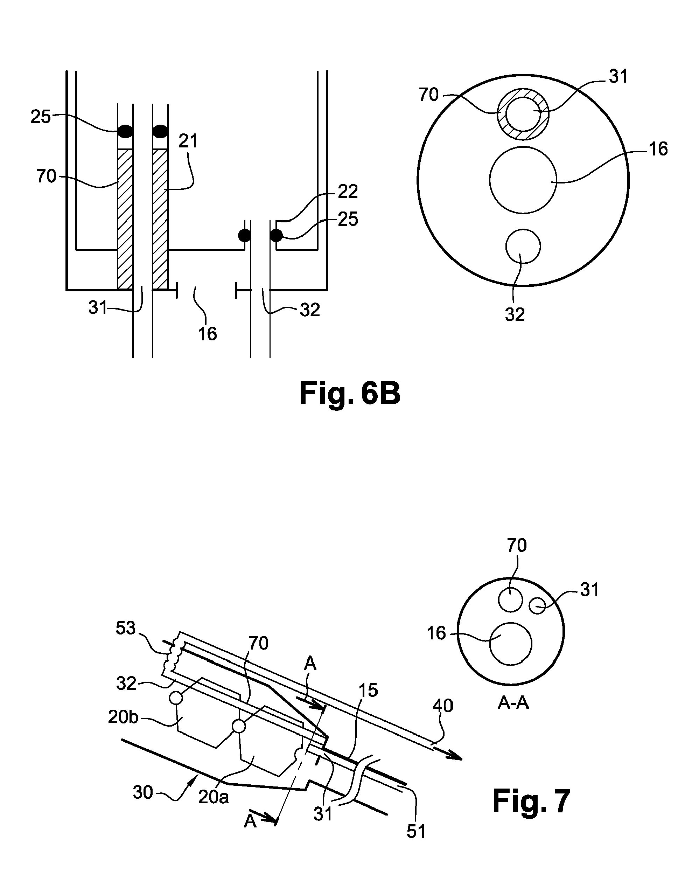

Figure 6 illustrates another exemplary embodiment of an ammonia generating system comprising a tank 10, a retaining unit 20, and a receiving part 30 for receiving the retaining unit 20. In this embodiment the receiving part 30 is integrated in a filler pipe 15 of the tank 10. The filler pipe 15 is a pipe used for filling the tank 10, and the filler pipe 15 is typically welded to a side wall of the tank 10. The receiving part 30 is integrated into a head of the tank filler pipe 15. To fill the tank 10, the retaining unit 20 is first removed and the ammonia precursor is refilled through a filling orifice 16 located in the bottom wall 33 of the receiving part 30. At the end of a filling operation, the retaining unit 20 (optionally a new one with fresh catalyst) is put in place in the receiving part 30.

The other features of the system may be similar to those of the embodiments of figures 1-3, and are therefore not further discussed. Figure 6A shows a section A-A of the receiving part 30, assuming that there is provided a heater 70 and nipples 31, 32. The section of figure 6A shows a first possible layout allowing accommodating the filling orifice 16 behind the retaining unit 20 by moving the heater 70 and the nipples 31, 32 away from the centre of the retaining unit 20. The sections of figure 6B shows a second possible layout allowing accommodating the filling orifice 16 centrally behind the retaining unit 20 by providing the heater 70 around the first nipple 31 and by making the first nipple 31 and the inlet section 21 longer. The second nipple 32 and outlet section 22 may remain the same. Alternatively there may also be provided a heater around nipple 32 in which case the second nipple 32 and inlet section 22 may also be longer (not shown).

The embodiments of figures 6, 6A and 6B are particularly advantageous if the catalyst durability can be made to fit the ammonia precursor consumption. The retaining unit 20 may for instance be replaced at each complete refilling of the tank 10 with ammonia precursor. Alternatively the retaining unit 20 may for instance be replaced after a number of complete refillings of the tank 10 with ammonia precursor, or after a predetermined time period, or after a predetermined ammonia precursor consumption.

Figure 7 illustrates en exemplary embodiment in which retaining modules 20a, 20b and/or the receiving part 30 are designed so as to be put hydraulically multiple retaining modules 20a, 20b in series or in parallel. Figure 7 shows an example of the retaining modules 20a, 20b mounted in series. A nipple 31 (not drawn in figure 7, but shown in figure 7A) which may be similar to the nipple 31 of figure 2 is fed by a fluid transfer device 51 with ammonia precursor coming from a tank 10. The nipple 31 is penetrating the lower retaining unit 20a, e.g. via an inlet section 21 as shown in figure 2. An additional nipple (not drawn) at an upper part of the lower retaining module 20a can be provided to allow the flow to go from the lower retaining module 20a to the upper retaining module 20b. A flexible line 53 fitted with a connector 32 allows the effluents to go to a buffer 40. A heater 70 goes through both retaining modules 20a, 20b. Figure 7A shows section A-A of figure 7 illustrating the position of the nipple 31, the heater 70 and a filler orifice 16.

In alternative embodiments the receiving part 30 may be designed to host two or more retaining modules side by side. The receiving part manifold can be arranged so as to have the retaining modules connected hydraulically in parallel or in series.

In such embodiments with multiple retaining modules, the multiple retaining modules (connected in series or in parallel) form together a retaining unit with similar properties as the retaining units that have been disclosed above.

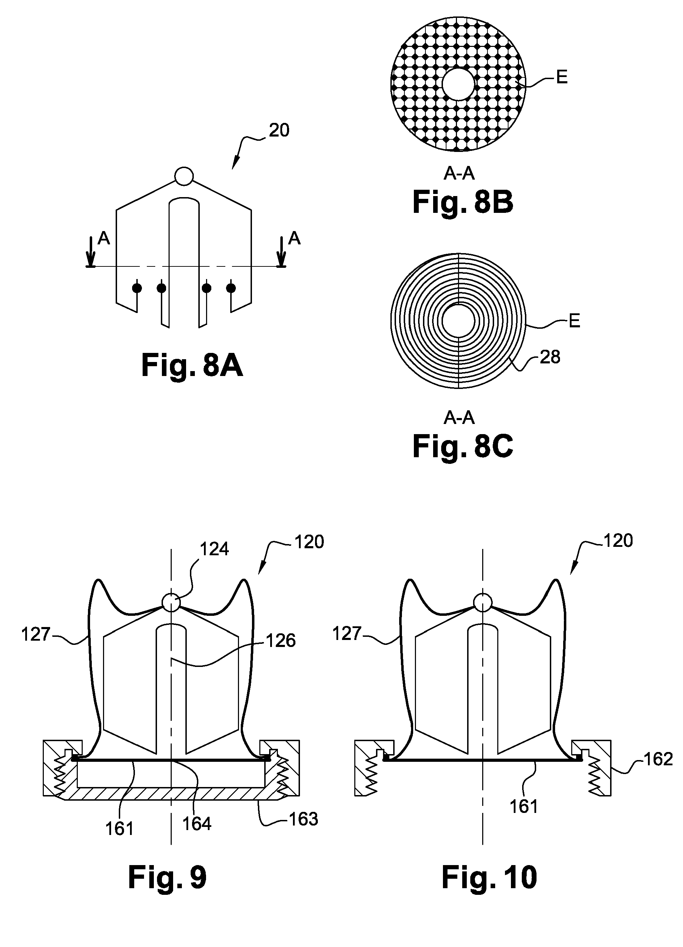

Figures 8A, 8B and 8C illustrate various possible embodiments of the retaining unit 20. The catalyst contained by the retaining unit 20 can have several shapes. In the case of enzymes, they can be powder, pellets, granules or beads; the enzymes can be immobilized or not on a substrate, and the substrate can be part of the retaining unit 20. Figure 8B shows a section with enzymes E immobilized on granules, the granules being retained in the retaining unit 20 e.g. by meshes (not shown) to avoid they are pumped with the reactants/effluents passing through the retaining unit 20.

Figure 8C shows enzymes E immobilized on a membrane 28 inserted e.g. in spiral shape in the retaining unit.

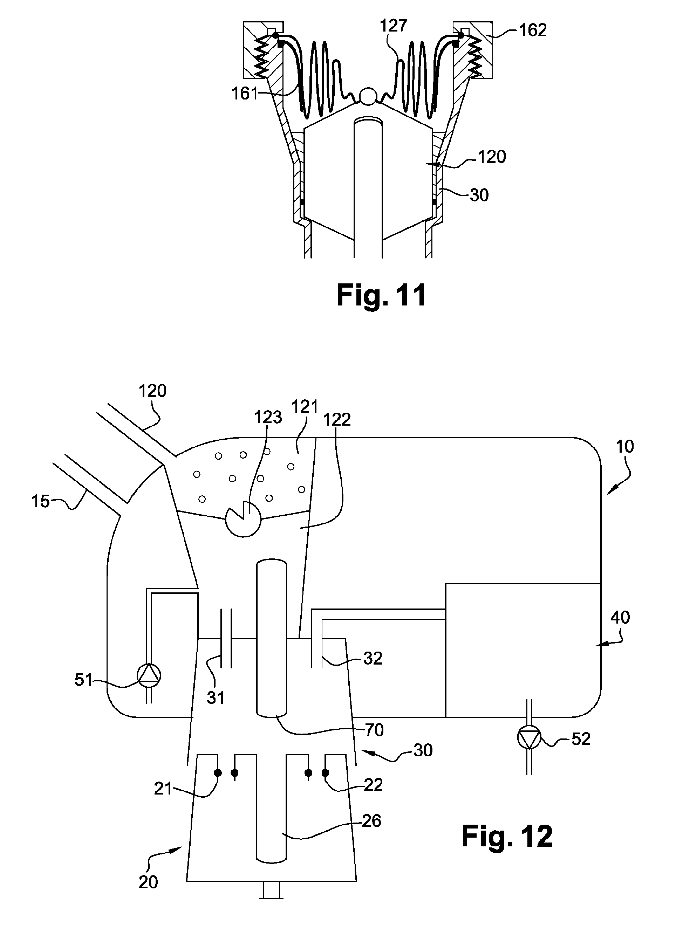

Figures 9, 10, and 11 illustrate another embodiment of a retaining unit 120 that may be useful with very aggressive reactants/effluents as it allows reducing even further the risk of contact with these fluids. The retaining unit 120 is encapsulated between two flexible membranes 127, 161. A first flexible membrane 127 extends over the retaining unit 120 and is connected with a threaded ring 162, and a second flexible membrane 161 covers the opening in the ring 162. The ring 162 may be further closed by a threaded cap 163 which cooperates with a complementary thread on the ring 162. The second flexible membrane 161 has a cut 164. After removal of the cap 163, see figure 10, the threaded ring 162 is screwed and the retaining unit 120 is pushed in the receiving part 30 through the cut 164 of the lower flexible membrane 129. After use, the retaining unit 20 can be pulled out of the receiving part 130: the membranes 127, 161 are coming back into place as shown on figure 10, the threaded ring 162 is removed, and the cap 163 can be put back as shown in figure 9. The flexible membranes 127, 161 can be e.g. elastomer membranes or flexible plastic films, e.g. a flexible polyethylene film. The flexibility and dimensions of the membranes 127, 161 are chosen such that the retaining unit 120 can be easily moved from the position shown in figure 10 to the position shown in figure 11 and back.

Embodiments of the invention may also be used in an ammonia precursor booster system comprising a storage compartment for storing ammonia precursor granules, and a dissolving compartment for storing an ammonia precursor solution, and for dissolving ammonia precursor granules in the ammonia precursor solution. An example of such a booster system is disclosed in European patent application EP 14177713.6 in the name of the Applicant, which is included herein by reference. Figures 12, 13 and 14 illustrate exemplary embodiments of a booster system with a retaining unit according to exemplary embodiments of the invention.

Figure 12 illustrates a system comprising a storage compartment 121 for storing ammonia precursor in solid form, and a dissolving compartment 122 for dissolving solid ammonia precursor in an ammonia precursor solution received via a transfer device 51 from a tank 10. The storage compartment 121 and the dissolving compartment 122 are included in the tank 10. The storage compartment 121 may be filled with solid ammonia precursor via a filler pipe 120. The liquid ammonia precursor solution may be added in tank 10 via a separate filler pipe 15. The heater 70 may be provided such as to extend both in a retaining unit 20 and in the tank 10. The heater 70 may be configured to heat the dissolving compartment 112 at a first temperature suitable for dissolving the ammonia precursor granules, and to heat the retaining unit 20 at a second temperature suitable for the chemical reaction using the catalyst. In an exemplary embodiment the heater may comprise a first and a second PTC heater each configured to heat the respective compartments at suitable temperatures. The other components of the system may be similar to the components described above in connection with the embodiments of figures 1-11.

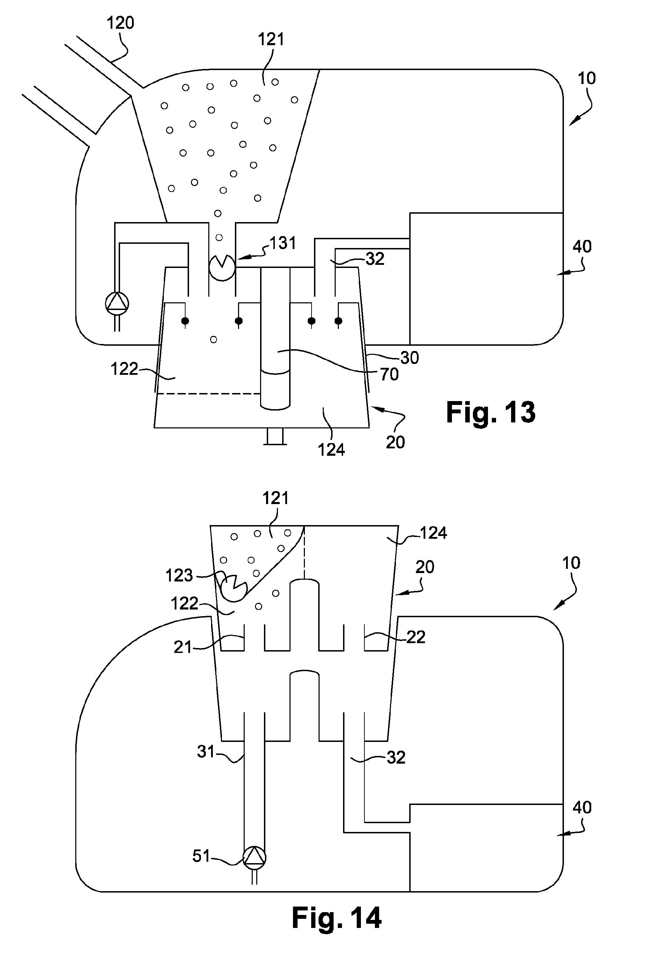

Figure 13 illustrates a system comprising a storage compartment 121 for storing ammonia precursor in solid form, and a dissolving compartment 122 for dissolving solid ammonia precursor in an ammonia precursor solution. The storage compartment 121 is included in the tank 10, but the dissolving compartment 122 is provided in the retaining unit 20. The storage compartment 121 may be filled with solid ammonia precursor via a filler pipe 120. The liquid ammonia precursor solution may be added in tank 10 via a separate filler pipe 15. An inlet coupling section 131 of the receiving part 30 is configured for allowing both solid ammonia precursor from storage compartment 121, and ammonia precursor solution from tank 10 (by means of a transfer device 51) to be fed to the dissolving compartment 122. The retaining unit 20 comprises the dissolving compartment 122 and a catalyst retaining compartment 124 in which a catalyst is immobilized on a carrier. The dissolving compartment 122 may be in fluid communication with the catalyst retaining compartment 124, but there may be provided a separation, e.g. a filter or a wall with small holes to avoid that undissolved solid ammonia precursor enters the catalyst retaining compartment 124. In that way a portion of the retaining structure solid residues that could eventually be left after the dissolution (e.g. residues of a coating that is not completely dissolved) may be collected. The replacement of the retaining unit 20 would allow taking these residues away on a regular basis without an additional operation. The other components of the system may be similar to the components described above in connection with the embodiments of figures 1-11.

In yet another non-illustrated exemplary embodiment, there may be provided a first dissolving compartment in the tank, and a second dissolving compartment in the retaining unit.

Figure 14 illustrates a system comprising a retaining unit 20 including both a storage compartment 121 for storing ammonia precursor in solid form, and a dissolving compartment 122 for dissolving solid ammonia precursor in an ammonia precursor solution. The storage compartment 121 is connected with the dissolving compartment 122 though a dosing device 123 for feeding an amount of solid ammonia precursor from storage compartment 121 to the dissolving compartment 122 when needed. Ammonia precursor solution from tank 10 is fed (by means of a transfer device 51) to the dissolving compartment 122 via inlet coupling section 31. The retaining unit 20 further comprises a catalyst retaining compartment 124 in which a catalyst is immobilized on a carrier. The dissolving compartment 122 may be in fluid communication with the catalyst retaining compartment 124, but there may be provided a separation, e.g. a filter or a wall with small holes to avoid that undissolved solid ammonia precursor enters the catalyst retaining compartment 124. In that way both the solid ammonia precursor and the catalyst may be replaced on a regular basis. It is noted that the figures are not drawn to scale, and that the storage compartment 121 for solid urea may be much larger than drawn.

Also further developed embodiment of the system of the invention may comprise a conversion unit for converting ammonia into hydrogen, and a hydrogen fuel cell.

Whilst the principles of the invention have been set out above in connection with specific embodiments, it is to be understood that this description is merely made by way of example and not as a limitation of the scope of protection which is determined by the appended claims.

## Claims

1. A system for use on-board a vehicle, for performing a chemical reaction using a catalyst, said system comprising:
a tank adapted for storing a fluid;
a retaining unit retaining a catalyst for performing the chemical reaction, said retaining unit having an inlet section and an outlet section;
a receiving part configured for removably receiving said retaining unit; said receiving part being provided with a first coupling section and a second coupling section which are removably couplable to the inlet section and the outlet section of the retaining unit in a sealing manner, respectively, said inlet coupling section being connected to the interior of the tank for receiving from said tank a fluid for use in the chemical reaction.

2. The system of claim 1, wherein the fluid is an ammonia precursor solution, and wherein the catalyst is adapted for decomposing the ammonia precursor solution to generate an ammonia solution.

3. The system of claim 1 or 2, wherein the catalyst is a biological catalyst.

4. The system of any one of the previous claims, wherein the receiving part is integrated in a wall of the tank.

5. The system of any one of the previous claims, wherein the tank is provided with a filler pipe, and wherein the receiving part is integrated in the filler pipe.

6. The system of any one of the previous claims, wherein the receiving part comprises heating means, said heating means being configured for heating the fluid in the retaining unit, when said retaining unit is arranged in said receiving part.

7. The system of any one of the previous claims, wherein said retaining unit is provided with a recess for receiving said heating means.

8. The system of any one of the previous claims, wherein the receiving part is provided with thermal conditioning means for heating and/or cooling the retaining unit.

9. The system of any one of the previous claims, further comprising a cover for closing off the receiving part with retaining unit, such that said receiving part and said cover form a closed housing around said retaining unit, except for the inlet and outlet coupling sections.

10. The system of any one of the previous claims, wherein said inlet and outlet coupling section are formed as pipe sections extending outwardly from a bottom wall of the receiving part, and wherein said inlet and outlet section of the retaining unit are formed as tube sections shaped to extend over or in the pipe sections.

11. The system of claim 10, wherein the retaining unit has a housing with a coupling wall, and wherein the tube sections extend from said coupling wall inwardly in said retaining unit.

12. SCR system for a vehicle comprising a system according to any one of the previous claims.

13. Fuel cell system comprising a system according to any one of the claims 1-11.

14. A receiving part for use in a system of any one of the claims 1-11, said receiving part being configured for removably receiving said retaining unit; said receiving part being provided with a first coupling section and a second coupling section which are removably couplable to an inlet section and an outlet section of a retaining unit in a sealing manner, respectively, said inlet coupling section being intended for connection to an interior of a tank.

15. Tank comprising a receiving part according to claim 14, said receiving part being integrated in a wall of the tank.

16. Filler pipe comprising a receiving part according to claim 14, wherein the receiving part is integrated in the filler pipe.

17. A retaining unit for use in a system of any one of the claims 1-11, said retaining unit being configured for retaining a catalyst for use in a chemical reaction, said retaining unit having an inlet section and an outlet section; said retaining part being configured for being placed in a receiving part with a first coupling section and a second coupling section, such that the inlet section and the outlet section of the retaining unit are removably coupled in a sealing manner to the inlet section and the outlet section.
